# EUROPEAN PATENT SPECIFICATION

(11) **EP 0 648 811 B1**
(45) Date of publication and mention of the grant of the patent: **13.01.1999**
(21) Application number: 94116427.9
(22) Date of filing: 18.10.1994
(51) Int. Cl.: C08L 77/00, C08L 51/04

(54) **Thermoplastic resin compositions with high impact strength at low temperature**
Thermoplastische Harzzusammensetzung mit hoher Schlagfestigkeit bei niedriger Temperatur
Composition de résine thermoplastique ayant une haute résistance au choc à basse température

(30) Priority: 19.10.1993 KR 9321721
(43) Date of publication of application: 19.04.1995
(73) Proprietor: CHEIL INDUSTRIES INC., Taegu 702-050 (KR)
(72) Inventor: Koo, Jung-Kee, Suwon, Kyungki-do (KR); Yeo, Hee-Gu, Kyungki-do (KR); Lim, Jong-Chul, Taegu 702-050, (KR)
(74) Representative: Hering, Hartmut, Dipl.-Ing.

(56) References cited:
- EP-A- 0 402 528
- US-A- 4 981 906
- DATABASE WPI Week 9107, Derwent Publications Ltd., London, GB; AN 91-047335 & JP-A-2 311 545 (DENKI KAGAKU KOGYO KK) 27 December 1990
- DATABASE WPI Week 9104, Derwent Publications Ltd., London, GB; AN 91-024873 & JP-A-2 240 158 (DAICEL CHEM IND KK) 25 September 1990

## Description

The present invention relates to thermoplastic resin compositions, and specifically to polymeric compositions comprising styrenic and polyamide resins, which exhibit excellent impact strengths at low temperatures.

Polyamide resins, due to their strong resistance to chemicals and good processability, are widely used for parts of automobiles, electrical and electronic appliances. The impact strength, and particularly the notched impact strength, of molded products made of polyamide resins are, however, poor. Thus, in recent years, intensive research efforts have been focused on the improvement of the impact strength by adding thermoplatic elastomers to the polyamides, and such improved polyamide blends are disclosed in U.S. Patent No. 4321336.

Polystyrene resins used in various applications, are relatively poor in their processability, resistance to chemicals, and heat resistance in particular when compared with polyamide resins. Thus, various processes for improving physical and chemical properties by compounding polyamides with styrenic resins have been developed. However, a simple blending of styrenic and polyamide resins, due to their mutual compatibility, results in a severe phase separation or delamination in their molded products.

U.S. Patent No. 4321336 discloses high impact polyamide blends consisting of one or more constituents taken from among aliphatic polyolefins, olefinic copolymers, styrenic copolymers, polymers of aliphatic dienes, acrylonitriles and polydimethylsiloxane, and polyamides. As disclosed in U.S. Patent No. 4496690, there are polymer compositions comprising a polyamide and a resin selected from the group consisting of copolymers consisting of a styrene, an acrylonitrile and an ethylene-unsaturated carbonamide, and graft polymers thereof on a rubber substrate polymer. Japanese Patent Laid-Open No. 2-240158 discloses high impact thermoplastic resin compositions comprising ABS(acrylonitnile/butadiene/styrene) resins, polyamide resins, and modified styrenic copolymers. Also disclosed in Japanese Patent Laid-Open No. 2-311545 are high impact thermoplastic resin compositions comprising copolymers of maleic imides, polyamides, modified polyolefins, and ABS resins.

A related subject matter is disclosed in EP-A-0 402 528 which also deals with impact resistant thermoplastic resin compositions.

All the thermoplastic resin compositions, as disclosed in the aforementioned patents or patent applications, retain satisfactory impact strengths at room temperature. Their impact strengths, however, are severely degraded at temperatures below -20°C. Typically, 0.3175 cm (1/8") notched impact strength should desirably be 70 to 80 kg·f/cm [kg · cm/cm], wherein 1 kg·f/cm is equivalent to 9.8 J/m. The notched impact strengths of the above thermoplastic resin compositions are in the range of 10 to 40 kg·f/cm [kg · cm/cm] at temperatures below -20°C. The present invention therefore relates to high-impact thermoplastic resin compositions with an improved 0.3175 cm (1/8") notch impact strength of 60 to 80 kg·f/cm [kg · cm/cm] at a temperature of -20°C. The present inventors developed an invention of resin compositions with superior impact strengths at low temperatures as well as at room temperature, which comprise polyamide resins, graft acrylonitrile/butadiene/styrene (g-ABS) resins, copolymers of styrene/acrylonitrile(SAN), modified styrenic resins, and copolymers of maleic imides.

A high-impact thermoplastic resin composition according to the invention is set out in claim 1.

Preferred embodiments thereof are subject matters of claims 2 to 12.

Specifics are provided of each component of the thermoplastic resin compositions in the following: (A) polyamide resins; (B) graft polymers (g-ABS resins); (C) copolymers (SAN copolymers); (D) modified styrenic copolymers; and (E) copolymers of maleic imides.

### (A) Polyamide resins.

Polyamide resins that may be used in the present invention are (1)nylon resins such as polycaprolactams(nylon6), poly-11-aminoundecanoyl acids(nylon11), poly-lauryllactams (nylon 12), poly-hexamethylene adipamides(nylon6,6), poly-hexaethylene azelamide(nylon6,9) and poly-hexamethylene dodecanodiamides (nylon6,12); and (2)copolymer of nylon resins such as nylon6/nylon 6,10, nylon6/nylon6,6, and nylon6/nylon12. The present invention includes at least one component from the above-listed nylon and copolymer nylon resins.

For satisfactory physical properties and heat resistance of the resin compositions, polyamide resins with a melting point above 200°C and with a relative viscosity (measured at 25°C with a 1 weight % of polyamide resin added to m-cresol) of 2.0 or higher may preferably be used.

### (B) Graft polymers (g-ABS resins).

The graft polymers used in this invention are typically those of grafted acrylonitrile/butadiene/styrene(ABS) /styrene(ABS) resins, which are prepared by grafting aromatic vinyl monomers and vinyl cyanide monomers with rubber polymers. In the resin compositions of this invention, from 10 to 50 weight %, preferably 20 to 50 weight %, of vinyl cyanide monomers are grafted with the aromatic vinyl monomers. One or more rubbers, which are selected from diene rubbers, ethylene rubbers, and 3-component copolymer rubbers consisting of ethylene/propylene/diene monomers, may be used. Specific examples of the useful aromatic vinyl monomers include styrene, para-t-butylstyrene, alpha-methylstyrene, beta-methylstyrene, vinylxylene, monochlorostyrene, dichlorostyrene, dibromostyrene, chlorostyrene, ethylstyrene, vinylnaphthalene, and divinylbenzyne. Useful vinyl cyanide monomers are acrylonitrile, methacrylonitrile, and ethacrylonitrile. Preferred components are styrene or alpha-methylstyrene for the aromatic vinyl monomer, and acrylonitrile for the vinyl cyanide monomer. Synthetic methods of the above g-ABS resins are well known to those skilled in the art. One of popular synthetic methods is the emulsion graft-polymerization of the aromatic vinyl monomers and vinyl cyanide monomers in the presence of a rubber polymer by using a polymerization initiator.

### (C) Copolymers (SAN copolymer).

The thermoplastic resin compositions of the present invention may contain copolymers of aromatic vinyl monomers, vinyl cyanide monomers, and other vinyl monomers polymerizable with these monomers. An exemplary copolymer is styrene/acrylonitrile (SAN) copolymer.

Useful aromatic vinyl monomers include styrene, para-t-butylstyrene, alpha-methylstyrene, beta-methylstyrene, vinylxylene, monochlorostyrene, dichlorostyrene, dibromostyrene, chlorostyrene, ethylstyrene, vinylnaphthalene, and divinylbenzyne. Vinyl cyanide monomers of use include acrylonitrile, methacrylonitrile, and ethacrylonitrile. Preferred are styrene or alpha-methylstyrene for the aromatic vinyl monomer, and acrylonitrile for the vinyl cyanide monomer.

Other vinyl monomers polymerizable with said aromatic vinyl and vinyl cyanide monomers are (1) methyl-, ethyl-, propyl-, and n-butyl (meth)acrylic acid ester monomers.

Synthetic methods of the SAN copolymers are well known to those skilled in the art. These methods include emulsion polymerization, suspension polymerization, bulk polymerization, and continuous polymerization.

SAN copolymers may not be contained in the thermoplastic resin compositions of the present invention, and are used in less than 10 weight %.

### (D) Modified styrenic resins.

Modified styrenic resins useful for this invention are block copolymers of aromatic and olefinic compounds, i.e., hydrogenated block copolymeric elastomers with less than 20% unsaturation therein. These modified styrenic resins are styrenic copolymers, which are synthesized by grafting a mixture of aromatic and olefinic compounds with unsaturated carboxylic compounds containing carboxylic or acid anhydride functional groups using a radical polymerization initiator.

Specific examples of the useful aromatic compounds are styrene, alpha-methylstyrene, vinylxylene, ethylvinylxylene, and vinylnaphthalene, of which one or more can be used in mixture. Olefinic compounds of use are butadiene, isobutylene, 1,3-pentadiene, and 2,3-dimethylbutadiene, of which one or more may be used in mixture.

For the composition of the modified styrenic copolymers, 10 to 70 weight % of the aromatic compounds is satisfactory, and 10 to 55 weight % is more preferably recommended for better results. The molecular weight of these modified styrenic copolymers can be acceptably within the range of 10,000 to 700,000, and may be preferably in the range of 20,000 to 500,000.

Useful unsaturated carboxylic compounds with carboxylic acid or acid anhydride functional groups are maleic anhydride, maleic acid, fumaric acid, acrylic acid, and methacrylic acid.

Radical initiators of use are diisopropylhydroperoxide, di-t-butylperoxide, p-ethanehydroperoxide, t-butylcumylperoxide, dicumylperoxide, 2,5-dimethyl-2,5-di(t-butylperoxy)hexane, di-t-butylperoxy-isopropylcarbonate, methylethylketoneperoxide, and cyclohexanoneperoxide, of which one or more may be used in mixture.

Though there are no particular restrictions to the preparation of the modified styrenic copolymers, it is preferred that styrenic polymers be grafted with unsaturated carboxylic compounds charged in an extruder in the presence of a radical initiator. This will facilitate the rather difficult processing of the modified styrenic copolymers due to their relatively high melt viscosity.

The acceptable fraction of the unsaturated carboxylic acid compounds with carboxylic acid or acid anhydride groups may be 0.1 to 10 parts by weight per 100 parts of the modified styrenic copolymers prepared, and may more preferably be 0.3 to 5 parts for better results. The desired compatibility and improved impact strength of the final thermoplastic resin products will not be achieved if the unsaturated carboxylic compounds are used in less than 0.1 part by weight in the preparation of the modified styrenic copolymers. The compatibility will be still good, but the impact strength will be detrimentally degraded if they are used in more than 10 parts by weight.

### (E) Copolymers of maleic imides.

The maleic imide copolymers are prepared by copolymerizing at least 30 weight % of aromatic vinyl monomers, 30 to 50 weight % maleic imide, 1 to 20 weight % of unsaturated dicarboxylic anhydride, and 0 to 30 weight % of other copolymerizable monomers. A preferred composition of the maleic imide copolymers is 50 to 60 weight % of aromatic vinyl monomers, 40 to 50 weight % maleic imide, 1 to 10 weight % of unsaturated dicarboxylic acid anhydride, and 0 to 30 weight % of other copolymerizable monomers. The heat resistance of the thermoplastic resin products will be poor if more than 70 weight % of aromatic vinyl or less than 30 weight % of maleic imide monomers are used. The processability of the thermoplastic resin compostions will degrade if the maleic imide monomers are used in excess of 50 weight %. If the dicarboxylic acid anhydride monomer is used in less than 1 weight %, the compatibility with polyamides will be poor, and the increased average particle size of the resultant maleic imide copolymers will degrade the physical properties. The unsaturated dicarboxylic anhydride monomer in excess of 20 weight % will result in too small an average particle size of the maleic imide copolymer, and consequently poor processability and heat stability of the thermoplastic resin compositions.

Specific examples of aromatic vinyl monomers useful for preparing the above maleic imide copolymers are styrene, alpha-methylstyrene, vinyltoluene, and t-butylstyrene. Useful maleic imide monomers are maleic imide, n-methyl maleic imide, n-ethyl maleic imide, n-butyl maleic imide, n-hexyl maleic imide, n-dichlorohexyl maleic imide, n-phenyl maleic imide, and n-trimaleic imide. Representatives of the unsaturated dicarboxylic anhydride monomers include anhydrides of maleic acid, methyl maleic acid, 1,2-dimethyl maleic acid, ethyl maleic acid, and phenyl maleic acid. Examples of the other useful copolymerizable monomers are acrylonitrile, methylmethacrylate, ethylmethacrylate, butylmethacrylate, hexylmethacrylate, dichlorohexylmethacrylate, decylmethacrylate, octadecylmethacrylate, hydroxyethylmethacrylate, and glycylmethacrylate, of which one or more may be used in mixture.

The above maleic imide copolymers are synthesized by reacting the aromatic vinyl monomers, maleic imide, unsaturated dicarboxylic anhydride, and other polymerizable monomers with ammonia or a primary amine. This is one of the imidization reactions, and can produce maleic imide copolymers containing imide functional groups. Various imidization reactions are well known, as disclosed in Japanese Patent Laid-Open Nos. 61-26936 and 62-845.

Primary amines useful for the imidization reaction are methylamine, ethylamine, propylamine, butylamine, hexaamine, decylamine, aniline, naphthaleneamine, chlorophenylamine, dichlorophenylamine, bromophehylamine, and dibromophenylamine. This imidization reaction can be carried in melt, bulk melt, or suspension phase using an autoclave. This reaction can also be performed in melt state in an extruder. Solvents used in the imidization reaction are ketones such as acetone, methylethylketone, methylisobutylketone, and dichlorohexanone; and ethers such as tetrahydrofuran and 1,4-dioxane; aromatic hydrocarbons such as toluene and xylene; dimethylbromamide; and N-methyl-2-pyrrolidone.

Preferable temperatures for the imidization reaction are from 50 to 350°C, and 100 to 300°C are more preferably recommended. The imidization can be also catalyzed by tertiary amines such as trimethylamine, triethylamine, N,N-dimethylaniline, and N,N-dimethylamine.

The present invention of thermoplastic resin compositions with an outstanding impact strength at low temperatures comprise (A) from 30 to less than 70 weight % of polyamide resins, (B) from 20 to 60 weight % of g-ABS resins, (C) from 0 to less than 10 weight % of SAN copolymers, (D) from 1 to 30 weight % of modified styrenic resins, and (E) from 1 to 30 weight % of maleic imide copolymers. The homogeneous mixture of these resin components is extruded in pellet forms through an extruder, and then into molded resin products. The extruding and molding processes may be apparent to and carried out with ease by those skilled in the art.

Additives as per special needs may be used in the preparation of thermoplastic resin compositions of the present invention. For example, glass fiber, carbon fiber, talc, silica, mica, and/or alumina may be added for improving the mechanical strength or heat distortion temperature of molded products. The compositions may further include such additives as UV-absorbers, oxidation inhibitors, flame retardants, lubricants, dyes and/or pigments.

The invention may be better understood by reference to the following examples which are intended for purposes of illustration and do not to be construed as in any way limiting the scope of the present invention, which is defined in the claims appended hereto.

### EXAMPLES

Resin components used in the examples are as follows:

### (A) Polyamide resins.

Two different polyamide resins (A1 and A2) were used in the Examples of the present invention. A1 is nylon6 (product #: KN-170) of Kolon Co., Ltd. of the Republic of Korea and nylon 6,6 (product #: 40-IB) of Monsanto Co., Ltd. of the U.S.A.

### (B) Graft polymers (g-ABS resins).

Two different graft polymers (g-ABS resins) (B1 and B2) used in the Examples were synthesized as follows:
- B1:: A mixture of 450g of polybutadiene latex, 390g of styrene, and 160g of acrylonitrile were emulsion-polymerized in a reactor vessel by the addition of 2g of dodecylmercaptan, 5g of potassium peroxide, and 5g sodium oleate. The resultant product was the graft polymer B1.
- B2:: A mixture of 150g of polybutadiene latex, 510g of alphamethylstyrene, 90g of styrene, and 250g of alphamethylstyrene, 90g of styrene, and 250g of acrylonitrile were emulsion-polymerized in reactor vessel by the addition of 2g of t-dodecylmercaptan, 5g of potassium persulfate, and 5g of sodium oleate. The graft polymer B2 was obtained from the reaction products.

### (C) SAN copolymers.

Two different SAN copolymers (C1 and C2) were prepared as follows:
- C1:: A mixture of 710g of styrene and 270g of acrylonitrile was suspension-polymerized in a reaction vessel by the addition of 5g t-dodecylmercaptan. The SAN copolymer C1 was then obtained from the reaction products.
- C2:: A mixture of 710g of styrene and 230g of acrylonitrile was emulsion-polymerized in a reaction vessel by the addition of t-dodecylmercaptan. The resultant SAN copolymer C2 was then obtained.

### (D) Modified styrenic resins.

A commercial modified styrenic resin (G-1901; Shell Chemical, Inc.) was used.

### (E) Copolymers of maleic imides.

Two different maleic imide resins (E1 and E2) were used in the Examples. E1 is the Polyimilex PSX-370 of Nippon Catalysts, Inc. of Japan, and E2 the MS-NA of Denka, Inc. of Japan.

### Examples 1 - 11

Examples 1-11 are the preparation of the thermoplastic resin compositions of various compositions by compounding components (A), (B), (C), (D), and (E), as shown in Table 1. The component resins were uniformly mixed in a Hensel mixer before the mixture was extruded through an extruder of a 40 mm diameter at 230 - 270°C in pellet forms. The pellets were dried at 80°C for 6 hours and extruded into test samples in a 170.1 g (6 oz.) extruder at molding temperature of 240 - 280°C and barrel temperature of 70°C. Impact strengths of the test samples of Examples 1 - 11 were tested according to Izod impact strength ASTM D648 (0.635 cm (1/4") and 0.3175 cm (1/8") notch). The test results are presented in Table 2 and expressed in kg·f/cm (1 kg·f/cm ≙ 9.8 J/m).

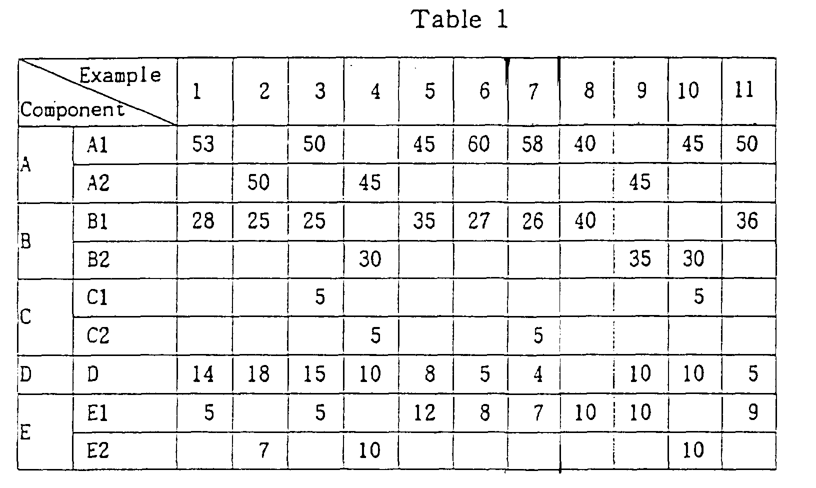

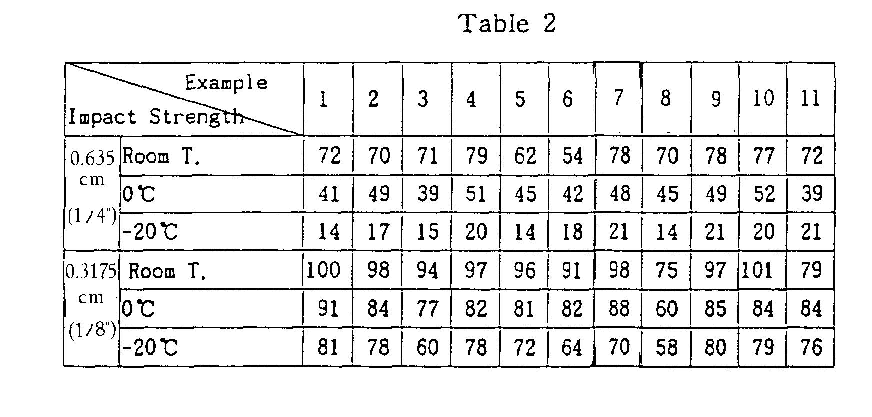

### Comparative Examples 1-6

Comparative Examples 1-6 are the preparation of the thermoplastic resin compounds comprising four or less out of five component resins: (A), (B), (C), (D), and (E). In Table 3, composition data for resin compounds in Comparative Examples 1-6 are presented. The preparational method of test samples from Comparative Examples 1 - 6 was the same as that of Examples 1-11. Impact strengths of test samples from resin compounds prepared in Comparative Examples 1-6 were measured according to Izod impact strength ASTM D648 (0.635 cm (1/4") and 0.3175 cm (1/8") notch). The measured impact strength data are presented in Table 4 and expressed in kg·f/cm (1 kg·f/cm ≙ 9.8 J/m)

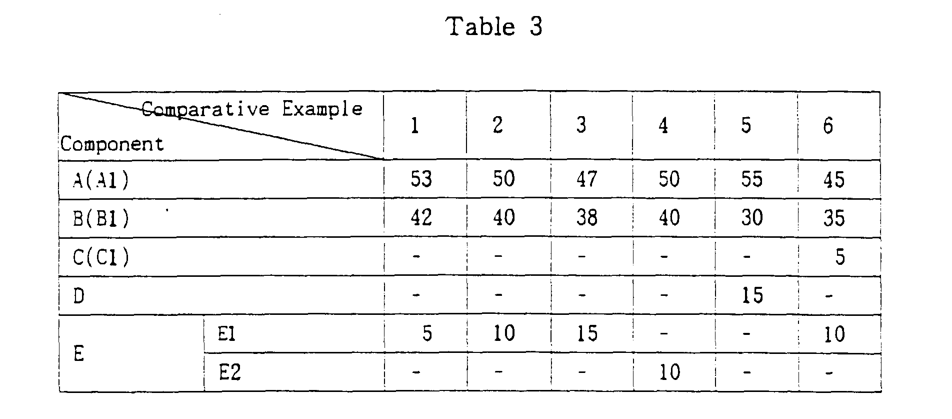

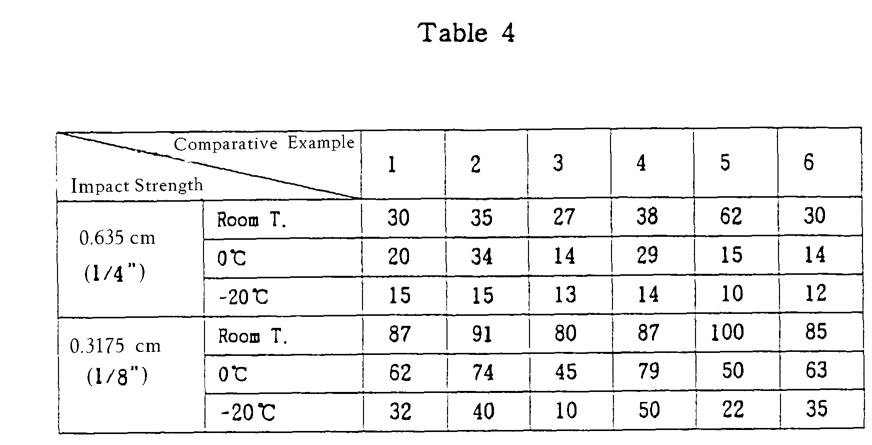

As apparent in the data in Tables 2 and 4, the 0.3175 cm (1/8") notched impact strengths of molded samples of the resin compositions in this invention show substantial improvements at a low temperature of -20°C. In other words, the thermoplastic resin compositions of the present invention exhibit superior impact strengths at low temperatures.

## Claims

1. A thermoplastic resin composition with high impact strength at low temperatures comprising:
(A) from 30 to less than 70 % of a polyamide resin;
(B) from 20 to 60 weight % of graft polymers obtainable by grafting
(b₁) at least 10 weight % of rubber polymers, with
(b₂) at least 40 weight % of aromatic vinyl monomers, and
(b₃) from 10 to 50 weight % of vinyl cyanide monomers;
(C) from 0 to less than 10 weight % of copolymers obtainable by polymerizing
(c₁) from 40 to 90 weight % of aromatic vinyl monomers,
(c₂) from 10 to 60 weight % of vinyl cyanide monomers, and
(c₃) from 0 to 40 weight % of a vinyl monomer selected from the group consisting of a methyl(meth)acrylic acid ester monomer, an ethyl(meth)acrylic acid ester monomer, a propyl(meth)acrylic acid ester monomer and a n-butyl(meth)acrylic acid ester monomer;
(D) from 1 to 30 weight % of modified styrenic copolymers which are synthesized by grafting hydrogenated block copolymeric elastomers with less than 20 % unsaturation from a mixture of aromatic and olefinic compounds with unsaturated carboxylic compounds containing carboxylic acid or acid anhydride functional groups using a radical initiator, and
(E) from 1 to 30 weight % of copolymers of maleic imides obtainable by polymerizing
(e₁) at least 30 weight % of aromatic vinyl monomers,
(e₂) from 30 to 50 weight % of maleic imide monomers,
(e₃) from 1 to 20 weight % of unsaturated dicarbocxylic anhydride monomers, and
(e₄) from 0 to 30 % by weight of other monomers copolymerizable with the monomers (e₁), (e₂) and (e₃).

2. The thermoplastic resin composition defined in Claim 1 wherein said polyamide resin (A) is at least one selected from the group of nylon resins consisting of polycaprolactam, polyaminoundecanoic acid, polylauryllactam, polyhexamethyleneadipamide, polyhexaethyleneamide, polyhexamethylenesebacamide, and polyhexamethylenedodecanodiamide, and copolymer resins consisting of polycaprolactam/polyhexamethylenesebacamide, polycaprolactam/polyhexamethyleneadipamide, and polycaprolactam/polylauryllactam.

3. The thermoplastic resin composition defined in Claim 1 wherein said rubber polymer (b₁) of the graft polymers (B) is at least one selected from the group consisting of diene rubber, ethylene rubber, and ethylene/propylene/diene copolymer rubber.

4. The thermoplastic resin composition defined in Claim 1 wherein said aromatic vinyl monomer (b₂) of the graft polymer (B) is at least one selected from the group consisting of styrene, para-t-butylstyrene, alpha-methylstyrene, beta-methylstyrene, vinylstyrene, monochloro-styrene, dichlorostyrene, dibromostyrene, chlorostyrene, ethylstyrene, vinylnaphthalene, and divinylbenzyne.

5. The thermoplastic resin composition defined in Claim 1 wherein said vinyl cyanide monomer (b3) of the graft polymer (B) is at least one selected from the group consisting of acrylonitrile, methacrylonitrile, and ethacrylontirile.

6. The thermoplastic resin composition defined in Claim 1 wherein said copolymer (C) is a SAN copolymer consisting of styrene and acrylonitrile.

7. The thermoplastic resin composition defined in Claim 1 wherein said unsaturated carboxylic compound of (D) is at least one selected from the group consisting of maleic acid anhydride, maleic acid, fumaric acid, acrylic acid, and methacrylic acid ester.

8. The thermoplastic resin composition defined in Claim 1 wherein said radical initiator is at least one selected from the group consisting of diisopropylenehydroperoxide, di-t-butylperoxide, p-ethanehydroperoxide, t-butylcumylperoxide, dicumylperoixde, 2,5- di(t-butylperoxy)-hexane, di-t-butylperoxy phthalate, succinylperoxide, t-butylperoxybenzoate, t-butylperoxy maleic acid, t-butylperoxy-isopropylcarbonate, methylethylketone peroxide, and cyclohexanoneperoxide.

9. The thermoplastic resin composition defined in Claim 1 wherein said aromatic and olefinic compound is at least one selected from the group consisting of styrene, toluene, and t-butylstyrene.

10. The thermoplastic resin composition defined in Claim 1 wherein said maleic imide monomer is at least one selected from the group consisting of maleic imide, N-methyl maleic imide, N-ethyl maleic imide, N-butyl maleic imide, N-hexyl maleic imide, N-dichlorohexyl maleic imide and N-phenyl maleic imide.

11. The thermoplastic resin composition defined in Claim 1 wherein said unsaturated dicarboxylic acid anhydride is at least one selected from maleic anhydride, methylmaleic anhydride, 1,2-dimethylmaleic anhydride, ethylmaleic anhydride, and phenylmaleic anhydride.

12. The thermoplastic resin composition defined in Claim 1 wherein said other copolymerizable monomer (e₄) of the maleic imide copolymers (E) is at least one selected from the group consisting of acrylonitrile, methylmethacrylonitrile, ethylmethacrylate, butylmethacrylate, hexylmethacrylate, dichlorohexylmethacrylate, decylmethacrylate, octadecyl methacrylate, hydroxyethylmethacrylate, and glycylmethacrylate.

## Patentansprüche

1. Thermoplastische Harzzusammensetzung mit hoher Schlagfestigkeit bei niedrigen Temperaturen, welche umfaßt:
(A) 30 bis weniger als 70% eines Polyamidharzes;
(B) 20 bis 60 Gew.-% eines Pfropfpolymers, das durch Aufpolymerisieren
(b₁) von mindestens 10 Gew.-% Kautschukpolymeren mit
(b₂) mindestens 40 Gew.-% aromatischen Vinylmonomeren und
(b₃) 10 bis 50 Gew.-% Vinylcyanidmonomeren erhalten wird;
(C) 0 bis weniger als 10 Gew.-% eines Copolymers, erhältlich durch Polymerisieren von
(c₁) 40 bis 90 Gew.-% aromatischen Vinylmonomeren,
(c₂) 10 bis 60 Gew.-% Vinylcyanidmonomeren, und
(c₃) 0 bis 40 Gew.-% eines Vinylmonomers, ausgewählt aus der Gruppe, die aus einem Methyl(meth)acrylsäureestermonomer, einem Ethyl(meth)acrylsäureestermonomer, einem Propyl(meth)acrylsäureestermonomer und einem n-Butyl(meth)acrylsäureestermonomer besteht;
(D) 1 bis 30 Gew.-% modifizierte Styrolcopolymere, die durch Aufpolymerisieren von hydrierten Blockcopolymerelastomeren mit weniger als 20 % Ungesättigtheit aus einem Gemisch von aromatischen und olefinischen Verbindungen mit ungesättigten Carboxylverbindungen, die funktionelle Carbonsäure- oder Säureanhydridgruppen unter Verwendung eines Radikal starters synthetisiert werden, und
(E) 1 bis 30 Gew.-% Copolymere von Maleinsäureimiden, die erhältlich sind durch Polymerisieren von
(e₁) mindestens 30 Gew.-% aromatischen Vinylmonomeren,
(e₂) 30 bis 50 Gew.-% Maleinsäureimidmonomeren,
(e₃) 1 bis 20 Gew.-% ungesättigten Dicarbonsäureanhydridmonomeren und
(e₄) 0 bis 30 Gew.-% anderen Monomeren, die mit den Monomeren (e₁), (e₂) und (e₃) copolymerisierbar sind.

2. Thermoplastische Harzzusammensetzung nach Anspruch 1, worin das Polyamidharz (A) mindestens eines ist, das aus der Gruppe von Nylonharzen, bestehend aus Polycaprolactam, Polyaminoundecansäure, Polylauryllactam, Polyhexamethylenadipinsäureamid,Polyhexaethylenamid, Polyhexamethylensebacinsäureamid und Polyhexamethylendodecandiamid und Copolymerharzen, bestehend aus Polycaprolactam/Polyhexamethylensebacinsäureamid, Polycaprolactam/Polyhexamethylenadipinsäureamid und Polycaprolactam/Polylauryllactam ausgewählt ist.

3. Thermoplastische Harzzusammensetzung nach Anspruch 1, worin das Kautschukpolymer (b₁) der Pfropfpolymere (B) mindestens eines ist, das aus der Gruppe ausgewählt ist, die aus Dienkautschuk, Ethylenkautschuk und Ethylen/Propylen/Dien-Co-polymerkautschuk besteht.

4. Thermoplastische Harzzusammensetzung nach Anspruch 1, worin das aromatische Vinylmonomer (b₂) des Pfropfpolymers (B) mindestens eines ist, das aus der Gruppe ausgewählt ist, die aus Styrol, para-t-Butylstyrol, alpha-Methylstyrol, beta-Methylstyrol, Vinylstyrol, Monochlorstyrol, Dichlorstyrol, Dibromstyrol, Chlorstyrol, Ethylstyrol, Vinylnaphthalin und Divinylbenzol besteht.

5. Thermoplastische Harzzusammensetzung nach Anspruch 1, worin das Vinylcyanidmonomer (b₃) des Pfropfpolymers (B) mindestens eines ist, das aus der Gruppe ausgewählt ist, die aus Acrylnitril, Methacrylnitril und Ethacrylnitril besteht.

6. Thermoplastische Harzzusammensetzung nach Anspruch 1, worin das Copolymer (C) ein SAN-Copolymer ist, das aus Styrol und Acrylnitril besteht.

7. Thermoplastische Harzzusammensetzung nach Anspruch 1, worin die ungesättigte Carboxylverbindung von (D) mindestens eine ist, die aus der Gruppe ausgewählt ist, die aus Maleinsäureanhydrid, Maleinsäure, Fumarsäure, Acrylsäure und Methacrylsäureester besteht.

8. Thermoplastische Harzzusammensetzung nach Anspruch 1, worin der Radikalstarter mindestens einer ist, der aus der Gruppe ausgewählt ist, die aus Diisopropylenhydroperoxid, Di-t-butylperoxid, p-Ethanhydroperoxid, t-Butylcumylperoxid, Dicumylperoxid, 2,5-Di(t-butylperoxy)hexan, Di-t-butylperoxyphthalat, Succinylperoxid, t-Butylperoxybenzoat, t-Butylperoxymaleinsäure, t-Butylperoxyisopropylcarbonat, Methylethylketonperoxid und Cyclohexanonperoxid besteht.

9. Thermoplastische Harzzusammensetzung nach Anspruch 1, worin die aromatische und olefinische Verbindung mindestens eine ist, die aus der Gruppe ausgewählt ist, die aus Styrol, Toluol und t-Butylstyrol besteht.

10. Thermoplastische Harzzusammensetzung nach Anspruch 1, worin das Maleinsäureimidmonomer mindestens eines ist, das aus der Gruppe ausgewählt ist, die aus Maleinsäureimid, N-Methylmaleinsäureimid, N-Ethylmaleinsaureimid, N-Butylmaleinsäureimid, N-Hexylmaleinsaureimid, N-Dichlorhexylmaleinsäureimid und N-Phenylmaleinsäureimid besteht.

11. Thermoplastische Harzzusammensetzung nach Anspruch 1, worin das ungesättigte Dicarbonsäureanhydrid mindestens eines ist, das aus Maleinsäureanhydrid, Methylmaleinsäureanhydrid, 1,2-Dimethylmaleinsäureanhydrid, Ethylmaleinsaureanhydrid und Phenylmaleinsäureanhydrid ausgewählt ist.

12. Thermoplastische Harzzusammensetzung nach Anspruch 1, worin das andere copolymerisierbare Monomer (e₄) des Maleinsäureimidcopolymers (E) mindestens eines ist, das aus der Gruppe ausgewählt ist, die aus Acrylnitril, Methylmethacrylnitril, Ethylmethacrylat, Butylmethacrylat, Hexylmethacrylat, Dichlorhexylmethacrylat, Decylmethacrylat, Octadecylmethacrylat, Hydroxethylmethacrylat und Glycylmethacrylat besteht.

## Revendications

1. Composition de résine thermoplastique à haute résistance au choc aux températures basses comprenant :
(A) de 30 à moins de 70 % d'une résine de polyamide ;
(B) de 20 à 60 % en poids de polymères greffés que l'on peut obtenir par greffage
(b₁) d'au moins 10 % en poids de polymères de caoutchouc, avec
(b₂) au moins 40 % en poids de monomères aromatiques de vinyle, et
(b₃) de 10 à 50 % en poids de monomères de cyanure de vinyle ;
(C) de 0 à moins de 10 % en poids de copolymères que l'on peut obtenir par polymérisation
(c₁) de 40 à 90 % en poids de monomères aromatiques de vinyle,
(c₂) de 10 à 60 % en poids de monomères de cyanure de vinyle, et
(c₃) de 0 à 40 % en poids d'un monomère aromatique de vinyle choisi dans le groupe comprenant un monomère ester acide methyl(meth)acrylique, un monomère ester acide ethyl(meth)acrylique, d'un monomère ester acide propyl(meth)acrylique et d'un monomère ester acide n-butyl(meth)acrylique ;
(D) de 1 à 30 % en poids de copolymères styréniques modifiés qui sont synthétisés par greffage d'élastomères copolymériques à blocs hydrogénés avec moins de 20 % insaturé d'un mélange de composés aromatiques et oléfiniques avec des composés carboxyliques non saturés contenant des groupes fonctionnels acide carboxylique ou anhydride acide utilisant un initiateur radical, et
(E) de 1 à 30 % en poids de copolymères d'imides maléiques que l'on peut obtenir par polymérisation :
(e₁) d'au moins 30 % en poids de monomères aromatiques de vinyle,
(e₂) de 30 à 50 % en poids de monomères d'imide maléique,
(e₃) de 1 à 20 % en poids de monomères d'anhydride dicarboxylique non saturés, et
(e₄) de 0 à 30 % en poids d'autres monomères que l'on peut copolymériser avec les monomères (e₁), (e₂) et (e₃).

2. Composition de résine thermoplastique selon la revendication 1, dans laquelle ladite résine de polyamide (A) est l'une au moins choisie dans le groupe de résines de Nylon comprenant polycaprolactame, acide de polyaminoundécanoique, polylauryllactame, polyhexaméthylène-adipamide, polyhexaéthylèneamide, polyhexaméthylènesebacamide et, polyhexaméthylènedodécanodiamide, et des résines de copolymère comprenant polycaprolactame/polyhexaméthylènesebacamide, polycaprolactame/polyhexamethylèneadipamide, et polycaprolactame/polylauryllactame.

3. Composition de résine thermoplastique selon la revendication 1, dans laquelle ledit polymère caoutchouteux (b₁) de polymères greffés (B) est l'un au moins choisi dans le groupe comprenant caoutchouc de diène, caoutchouc d'éthylène et caoutchoucs de copolymère d'éthylène/propylène/diène.

4. Composition de résine thermoplastique selon la revendication 1, dans laquelle ledit monomère aromatique de vinyle (b₂) du polymère greffé (B) est l'un au moins choisi dans le groupe comprenant styrène, para-t-butylstyrene, alpha-méthystyrène, beta-méthylstyrène, vinylstyrène, monochloro-styrène, dichlorostyréne, dibromostyrène, chlorostyrène, éthylstyrène, vinylnaphthalène et divinylbenzyne.

5. Composition de résine thermoplastique selon la revendication 1, dans laquelle ledit monomère de cyanure de vinyle (b₃) du polymère greffé (B) est l'un au moins choisi dans le groupe comprenant acrylonitrile, méthacrylonitrile et éthacrylontirile.

6. Composition de résine thermoplastique selon la revendication 1, dans laquelle ledit copolymère (C) est un copolymère SAN comprenant styrène et acrylonitrile.

7. Composition de résine thermoplastique selon la revendication 1, dans laquelle ledit composé carboxylique non saturé de (D) est l'un au moins choisi dans le groupe comprenant anhydride acide maléique, acide maléique, acide fumarique, acide acrylique et ester acide méthacrylique.

8. Composition de résine thermoplastique selon la revendication 1, dans laquelle ledit initiateur radical est l'un au moins choisi dans le groupe comprenant diisopropylènehydropéroxyde, di-t-butylpéroxyde, p-éthanehydroperoxyde, t-butylcumylperoxyde, dicumylpéroxyde, 2,5-di(t-butylpéroxy)-hexane, di-t-butylpéroxyphtalate, succinylperoxyde, t-butylpéroxybenzoate, acide t-butylperoxymaléique, t-butylpéroxy-isopropylcarbonate, péroxyde de méthyléthylcétone, et cyclohexanonepéroxide.

9. Composition de résine thermoplastique selon la revendication 1, dans laquelle ledit composé aromatique et oléfinique est l'un au moins choisi dans le groupe comprenant styrène, toluène, et t-butylstyrène.

10. Composition de résine thermoplastique selon la revendication 1, dans laquelle ledit monomère d'imide maléique est l'un au moins choisi dans le groupe comprenant imide maléique N-méthyle, imide maléique N-éthyl, imide maléique N-butyl, imide maléique N-hexyl, imide maléique N-dichlorohexyle et imide maléique N-phényl.

11. Composition de résine thermoplastique selon la revendication 1, dans laquelle ledit anhydride acide dicarboxylique non saturé est l'un au moins choisi dans anhydride maléique, anhydride méthylmaléique, anhydride 1,2-diméthylmaléique, anhydride éthylmaléique, et anhydride phénylmaléique.

12. Composition de résine thermoplastique selon la revendication 1, dans laquelle l'autre monomère copolymérizable (e4) des copolymères imides maléiques (E) est l'un au moins choisi dans le groupe comprenant acrylonitrile, méthylméthacrylonitrile, éthylméthacrylate, butylméthacrylate, hexylméthacrylate, dichlorohexylméthacrylate, décylméthacrylate, octadylméthacrylate, hydroxyéthylméthacrylate et glycylméthacrylate.
